# EUROPEAN PATENT SPECIFICATION

(11) **EP 2 913 522 B1**
(45) Date of publication and mention of the grant of the patent: **19.04.2017**
(21) Application number: 14190770.9
(22) Date of filing: 29.10.2014
(51) Int. Cl.: F03D 13/20, E02D 27/42

(54) **Tower for wind turbine apparatus**
Turm für eine Windturbine
Tour pour une éolienne

(30) Priority: 28.02.2014 JP 2014038139
(43) Date of publication of application: 02.09.2015
(73) Proprietor: MITSUBISHI HEAVY INDUSTRIES, LTD., Tokyo 108-8215 (JP)
(72) Inventor: Nakayama, Shin, TOKYO, 108-8215 (JP); Yokoyama, Hiroaki, TOKYO, 108-8215 (JP); Hasegawa, Kazumasa, TOKYO, 108-8215 (JP)
(74) Representative: Intès, Didier Gérard André

(56) References cited:
- EP-A1- 1 876 316
- EP-A1- 2 006 471
- EP-A1- 2 479 430
- DE-A1-102008 016 288
- DE-A1-102011 085 947
- US-A1- 2011 210 233
- US-A1- 2013 227 897

## Description

### TECHNICAL FIELD

This disclosure relates to a tower for a wind turbine generating apparatus and a wind turbine generating apparatus.

### BACKGROUND

In recent years, a wind turbine generating apparatus that generates electrical power by utilizing wind as a renewable energy is increasingly becoming common from the perspective of preserving the global environment.

A tower used for the wind turbine generating apparatus is required to be tolerant of the stress caused by both of the own weight of the wind turbine (rotor) itself and the torque caused by the wind load acting on the turbine blade and the tower itself. This stress tends to especially concentrate on near the boundary between the tower and the support part that supports the tower. Patent Document 1 describes that it is desirable to fix the bottom of the tower by welding in order to tolerate this stress.

### Citation List

### Patent Literature

Patent Document 1: JP2008-520861
Patent Document 2: DE 10 2011 085947
Patent Document 3: EP 1 876 316

### SUMMARY

### Technical Problem

In recent years, the wind turbine generating apparatus tends to increase in size from the perspective of improving the power generation efficiency. Thus, the stress occurring near the boundary between the tower and the support part supporting the tower is increased, raising the risk of the tower being damaged. Especially, in the case of a floating wind turbine generating apparatus or in the case where the tower and the support part supporting the tower have different cross-sectional shapes, for instance, large stress is likely to occur near the boundary.

Accordingly, even if the bottom of the tower is fixed by welding as described in Patent Document 1, there are an increasing number of occasions where it is difficult for the boundary part between the tower and the support part to tolerate the above stress.
Besides, Patent Document 2 discloses a pylon base section for arrangement and fixing on a foundation and for the erection of a pylon of a wind power installation which comprises a casing portion and support elements which are fixedly connected by welding with flanges such that forces are passed from the support elements to the flanges and in the casing portion.
Patent Document 3 discloses a prefabricated modular tower of the kind used as a support for wind generators having a reinforced structure provided with an internal structure of horizontal and vertical stiffeners, preferably made of reinforced concrete.

The present invention has been made in view of the above problem. An object of the invention is to provide a tower for a wind turbine generating apparatus that is capable of decreasing the stress concentration on the boundary between the tower and the support part supporting the tower, and effectively reducing damage to the tower and the support part.

### Solution to Problem

(1) A tower for a wind turbine generating apparatus according to some embodiments of the present invention comprises:
   a tower body of a cylindrical shape; and
   a plurality of reinforcement members disposed on an internal circumferential face of the tower body so as to extend along a height direction of the tower body from a support part supporting the tower body,
   wherein the reinforcement members are arranged with an interval between one another in a circumferential direction of the tower body.

   According to the tower for a wind turbine generating apparatus described in (1), the load received by the wind turbine is effectively distributed over the support part by the reinforcement members when the load is transmitted to the support part via the tower body, thereby decreasing the stress concentration on the boundary between the tower body and the support part and effectively reducing the damage to the tower body and the support part.
(2) The tower for a wind turbine generating apparatus according to (1) further comprises a ring member disposed on the internal circumferential face of the tower body so as to connect upper end parts of the reinforcement members.
   According to the tower for a wind turbine generating apparatus described in (2), the load received by the wind turbine is effectively distributed over the support part from the tower body via the ring member and the reinforcement members when the load is transmitted to the support part via the tower body, thereby decreasing the stress concentration on the boundary between the tower body and the support part and effectively reducing the damage to the tower body and the support part.
(3) In the tower for a wind turbine generating apparatus according to (2), each of the upper end parts includes a cut-out at an outer end of said each of the upper end parts in a radial direction of the tower body so that each of the reinforcement members does not contact both of the ring member and the tower body at one point.
   When three of each one of the reinforcement members, the ring member, and the tower body contact at one point, the stress concentrates on the one point whose surroundings then become more likely to get damaged. Thus, by providing a cut-out as in the tower for a wind turbine generating apparatus described in (3), it is possible to effectively reduce such damage.
(4) In some embodiments, in the tower for a wind turbine generating apparatus according to (2) or (3), the tower body is formed by connecting ends of a plurality of cylindrical members with one another, and the ring member also serves as a flange for connecting the ends of the cylindrical members with one another.
   According to the tower for a wind turbine generating apparatus described in (4), by using the flange for connecting the ends of the cylindrical members as the ring member described in (2) or (3), it is possible to effectively reduce the damage to the tower body and the support part with a simple configuration without additionally providing the ring member separately from the flange.
(5) A tower for a wind turbine generating apparatus according to another embodiment of the present invention comprises:
   a tower body of a cylindrical shape; and
   a plurality of reinforcement members disposed on an internal circumferential face of the tower body so as to extend along a height direction of the tower body from a support part supporting the tower body,
   wherein the reinforcement members are arranged with an interval between one another in a circumferential direction of the tower body, and
   each of the upper end parts includes a cut-out at an inner end of said each of the upper end parts in a radial direction of the tower body so that a width in the radial direction of the tower body of each of the reinforcement member increases from the upper end part toward a lower side.
   The stress concentration particularly tends to occur on the boundary between the tower body and the upper end of each of the reinforcement members among the boundaries between the tower body and each of the reinforcement members. Thus, by providing a cut-out at the position described in (5), the stress concentration on the boundary between the tower body and the upper end parts of the reinforcement members is decreased, and thus it is possible to effectively reduce the damage to the tower body and the reinforcement members.
(6) In some embodiments, in the tower for a wind turbine generating apparatus according to any of (1) to (5), the tower body includes a door opening, and the door opening is disposed between two of the reinforcement members arranged adjacently in the circumferential direction of the tower body.
   Around the door opening of the tower body, reinforcement by a coaming or the like tends to be required because the stress tends to concentrate thereon. In this regard, according to the tower for a wind turbine generating apparatus described in (6), by providing a door opening between adjacent two of the above reinforcement members for reducing damage to the tower body and the support part, it is possible to decrease the stress that occurs around the door opening. As a result, it is possible to simplify the reinforcement configuration for the door opening such as a coming while reducing the damage to the tower body.
(7) In some embodiments, in the tower for a wind turbine generating apparatus according to any of (1) to (6), the reinforcement members include a first group of reinforcement members arranged radially to extend along the radial direction of the tower body; and a second group of reinforcement members arranged along an extending direction of a plurality of ribs provided standing upright in the support part, each of the second group of reinforcement members being arranged over a respective one of the ribs.
   Basically, it is desirable to arrange the reinforcement members radially along the radial direction of the tower in the perspective of proper distribution of the load over the support part from the tower body. However, when a plurality of ribs are disposed inside the support part supporting the tower body in order to increase the stiffness of the support part, it is desirable to arrange each of the reinforcement members over the corresponding one of the ribs along the extending direction of the ribs in order to make the ribs function effectively.
   According to the tower for a wind turbine generating apparatus described in (7), the reinforcement members include a first group of reinforcement members arranged radially to extend along the radial direction of the tower body; and a second group of reinforcement members arranged along the extending direction of the ribs provided standing upright in the support part, each of the second group of reinforcement members being arranged over a respective one of the ribs. Thus, when the load received by the wind turbine is transmitted to the support part via the tower body, it is possible to effectively distribute the load over the support part by the first group of reinforcement members radially arranged while making the ribs provided standing upright in the support part function effectively. As a result, the stress concentration on the boundary between the tower body and the support part is decreased, which makes it possible to effectively reduce the damage to the tower body and the support part.
(8) A wind turbine generating apparatus according to some embodiments comprises:
   a rotor including at least one blade;
   a generator configured to be driven by rotation energy of the rotor being transmitted; and the tower for a wind turbine generating apparatus according to any one of (1) to (7).

According to the wind turbine generating apparatus described in (8), the load received by the wind turbine is effectively distributed over the support part by the reinforcement members when the load is transmitted to the support part via the tower body, thereby decreasing the stress concentration on the boundary between the tower body and the support part, thereby making it possible to effectively reduce the damage to the tower body and the support part. As a result, it is possible to realize the stable operation of the wind turbine generating apparatus.

### Advantageous Effects

According to at least one embodiment of the present invention, it is possible to decrease the stress concentration on the boundary between the tower body and the support part supporting the tower and to effectively reduce the damage to the tower body and the support part.

### BRIEF DESCRIPTION OF DRAWINGS

FIG. 1 is an overall diagram of the wind turbine generating apparatus according to some embodiments.
FIG. 2 is an oblique view of the vertical cross-section of the boundary part between the tower and the support part according to some embodiments.
FIG. 3 is a view from above the ring member of the boundary part between the tower and the support part according to some embodiments for explaining the relationship between the arrangement of the reinforcement members and the arrangement of the ribs.
FIG. 4 is an oblique view of the vertical cross-section of the boundary part between the tower and the support part according to some embodiments.
FIG. 5 is an oblique view of the vertical cross-section of the boundary part between the tower and the support part according to some embodiments.
FIG. 6A is a cross-sectional view (cross-section in the radial direction of the tower body) of the lower end part of the reinforcement member according to some embodiments. FIG. 6B is a cross-sectional view (cross-section in the radial direction of the tower body) of the lower end part of the reinforcement member according to some other embodiments.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention. Also, the same element is associated with the same reference sign to occasionally omit the detailed description.

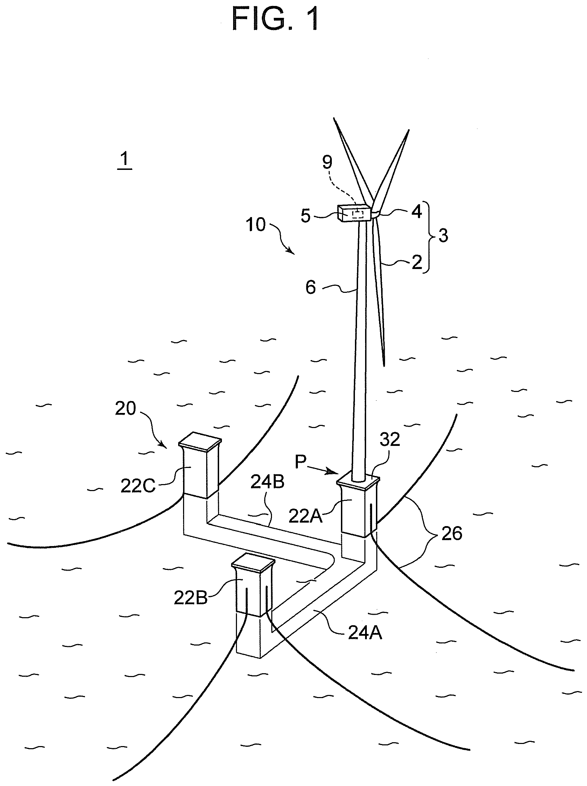

Fig. 1 is an overall diagram of the wind turbine generating apparatus according to some embodiments.

As shown in Fig. 1, the wind turbine generating apparatus 1 includes a float 20 floating on the water and a wind turbine generator 10 disposed on the float 20.

The wind turbine generator 10 includes a rotor 3, a nacelle 5, and a tower 6 (a tower for a wind turbine generating apparatus). The rotor 3 includes at least one blade 2 and a hub 4, and is connected to the generator 9 housed in the nacelle 5 via a rotation shaft. The rotor 3 rotates by receiving wind at the blade 2, and the power generation is performed by the rotation energy of the rotor 3 being transmitted and the generator being driven. The tower 6 has a cylindrical shape whose external diameter is larger at the base than at the tip. The tower 6 is coupled to the float 20.

The float 20 includes three columns 22 (22A, 22B, 22C), a first lower hull 24A connecting the center column 22A and the left column 22B, and a second lower hull 24B connecting the center column 22A and the right column 22C. As shown in Fig. 1, the float 20 has an approximate V-shape in planar view. On the center column 22A positioned in the middle of the three columns 22, the tower 6 of the above described wind turbine generator 10 is provided standing upright.

Also, mooring cables 26 are connected to each of the three columns 22A, 22B, 22C. Anchors (not shown) fixed on the bottom of the water are connected to the mooring cables 26, whereby the float 20 is moored on the sea against the drift force or the rotational moment.

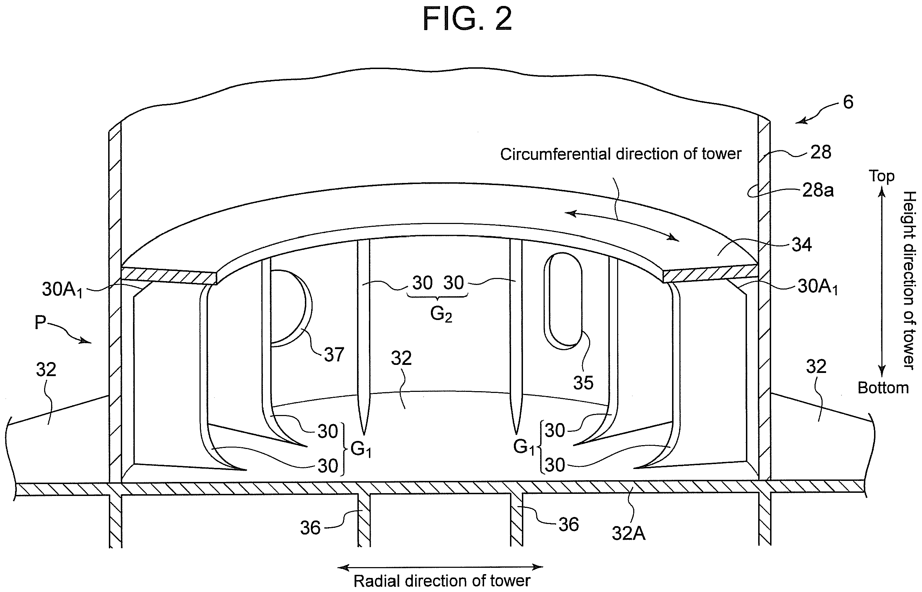

Next, the internal configuration as in Fig. 1 of the boundary part P between the tower 6 and the support part 32 (the top part of the center column 22A in the embodiment shown in Fig. 1) will be described in reference to Figs. 2 to 5.

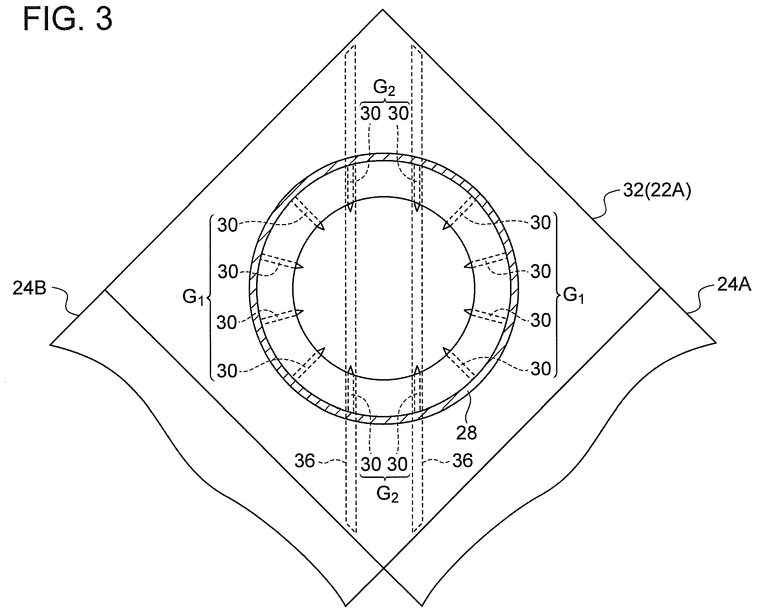

Fig. 2 is an oblique view of the vertical cross-section of the boundary part P between the tower 6 and the support part 32 as shown in Fig. 1, particularly showing the cross-section parallel to the vertical plane that passes through the column 22B and the column 22C of the cross-sections that pass through the axis of the tower 6. Fig. 3 is a view of the boundary part P between the tower 6 and the support part 32, as seen from above the ring member 34 (which will be described below) shown in Fig. 2.

As shown in Figs. 2 and 3, the tower 6 includes at least the tower body 28 of a cylindrical shape and a plurality of reinforcement members 30. In some embodiments, the reinforcement members 30 are reinforcement ribs (stiffener) having a plate-like form, arranged so that the plane of the plate-like form is substantially orthogonal to the internal circumferential face 28a of the tower body 28. As shown in Fig. 2, the reinforcement members 30 are disposed on the internal circumferential face 28a of the tower body 28 so as to extend along the height direction of the tower body 28 from the top-board 32A of the support part 32 supporting the tower body 28, arranged with an interval between one another in the circumferential direction of the tower body 28. The reinforcement members 30 extend along the radial direction of the tower body 28 from the internal circumferential face 28a of the tower body 28.

As a result, when the wind load received by the rotor 3 is transmitted to the support part 32 via the tower body 28, the load is effectively distributed over the support part 32 by the reinforcement members 30, thereby making it possible to decrease the stress concentration on the boundary between the tower body 28 and the support part 32, and thus to effectively reduce the damage to the tower body 28 and the support part 32.

Especially for the configuration in which the tower body 28 and the support 32 have different cross-sectional shapes (in the configuration shown in Figs. 1 to 3, the tower 28 has a cross-section of a circular shape and the support part 32 has a cross-section of a quadrilateral shape), the stress concentration is likely to occur on the boundary between the tower body 28 and the support part 32. Thus, it is possible to effectively reduce such stress concentration using the above reinforcement members 30.

Herein, the tower body 28 and the support part 32 may be joined to each other by welding, or by bolts or the like. Similarly, the tower body 28 and the reinforcement members 30 may be joined to each other by welding or by bolts or the like. Also similarly, the reinforcement members 30 and the top-board 32A of the support part 32 may be joined to each other by welding, or bolts or the like.

As shown in Fig. 2, the tower 6 according to some embodiments further includes a ring member 34 disposed on the internal circumferential face 28a of the tower body 28 so as to connect the upper end parts of the reinforcement members 30. That is, the bottom face of the ring member 34 is joined to the upper end parts of the reinforcement parts 30, so that the outer circumferential edge of the ring member 34 is joined to the internal circumferential face 28a of the tower body 28 entirely in the circumferential direction.

As a result, the load is effectively distributed by being transmitted via the ring member 34 when the load is transmitted to the reinforcement members 30 from the tower body 28, which makes it possible to improve the decreasing effect on the stress concentration on the boundary between the tower body 28 and the support part 32.

Herein, the tower body 28 and the ring member 34 may be joined to each other by welding, or by bolts or the like. Similarly, the reinforcement members 30 and the ring member 34 may be joined to each other by welding, or by bolts or the like.

In some embodiment, as shown in Fig. 2, each of the upper end parts of the reinforcement members 30 includes a cut-out 30A₁ at an outer end of said each of the upper end parts in the radial direction of the tower body 28 so that each of the reinforcement members 30 does not contact both of the ring member 34 and the tower body 28 at one point.

When three of each one of the reinforcement members 30, the ring member 34, and the tower body 28 contact at one point, the stress concentrates on the one point whose surroundings then become more likely to get damaged. Thus, by providing a cut-out 30A₁ as described above, it is possible to effectively reduce such damage.

In some embodiment, as shown in Fig. 2, the tower body 28 includes a door opening 35 for persons and equipments to go in and out, and the door opening 35 is disposed between two of the reinforcement members 30 arranged adjacently in the circumferential direction of the tower body 28.

Around the door opening 35 of the tower body, reinforcement by a coaming or the like tends to be required because the stress tends to concentrate thereon. In this regard, by providing a door opening 35 between adjacent two of the above reinforcement members 30, it is possible to decrease the stress that occurs around the door opening 35. As a result, it is possible to simplify the reinforcement configuration for the door opening 35 such as a coming while reducing the damage to the tower body 28.

In some embodiments, as shown in Fig. 2, the tower body 28 includes a duct opening 37 for taking in or discharging the air for cooling the equipments provided for the wind turbine generating apparatus 1. The duct opening 37 is disposed between two of the reinforcement members 30 arranged adjacently in the circumferential direction of the tower body 28.

As the stress tends to concentrate around the duct opening 37 of the tower body, by providing a duct opening 37 between adjacent two of the above reinforcement members 30, it is possible to decrease the stress that occurs around the duct opening 37. As a result, it is possible to reduce the damage to the tower body 28.

In some embodiments, the reinforcement members 30 include a first group of reinforcement members G₁ arranged radially to extend along the radial direction of the tower body 28; and a second group of reinforcement members G₂ arranged along an extending direction of a plurality of ribs 36 (reinforcement ribs) provided standing upright in the support part 32, each of the second group of reinforcement members G₂ being arranged over a respective one of the ribs 36. The ribs 36 are provided to support from below the top-board 32A of the support part 32 in order to increase the stiffness of the support part 32.

Basically, it is desirable to arrange the reinforcement members 30 radially along the radial direction of the tower body 28 from the perspective of proper distribution of the load over the support part 32 from the tower body 28. However, when the ribs 36 are disposed inside the support part 32 supporting the tower body 28 in order to increase the stiffness of the support part 32, it is desirable to arrange at least some of the reinforcement members 30 to extend over the corresponding ribs 36 along the extending direction of the ribs 36 in order to make the ribs function effectively.

The reinforcement members 30 shown in Figs. 2 and 3 include a first group of reinforcement members G₁ arranged radially to extend along the radial direction of the tower body 28 and a second group of reinforcement members G₂ arranged along an extending direction of the ribs 36 provided standing upright in the support part, each of the second group of reinforcement members G₂ being arranged over a respective one of the ribs. Thus, when the load received by the rotor 3 is transmitted to the support part 32 via the tower body 28, it is possible to effectively distribute the load over the support part 32 by the first group of reinforcement members G₁ radially arranged while making the ribs 36 provided standing upright in the support part 32 function effectively. As a result, the stress concentration on the boundary between the tower body 28 and the support part 32 is further decreased, which makes it possible to effectively reduce the damage to the tower body 28 and the support part 32.

Herein, from the perspective of securing the strength against the wind load, it is desirable that the second group of reinforcement members G₂ and the ribs 36 shown in Figs. 2 and 3 extend in the direction along (preferably, in the same direction as) the main wind direction (basically, the wind direction of the highest frequency at the position). For the floating wind turbine generating apparatus 1 shown in Fig. 1, it is desirable that the second group of reinforcement members G₂ and the ribs 36 extend in the direction along (preferably, in the same direction as) the pitch direction (back-and-forth rolling direction) of the float 20.

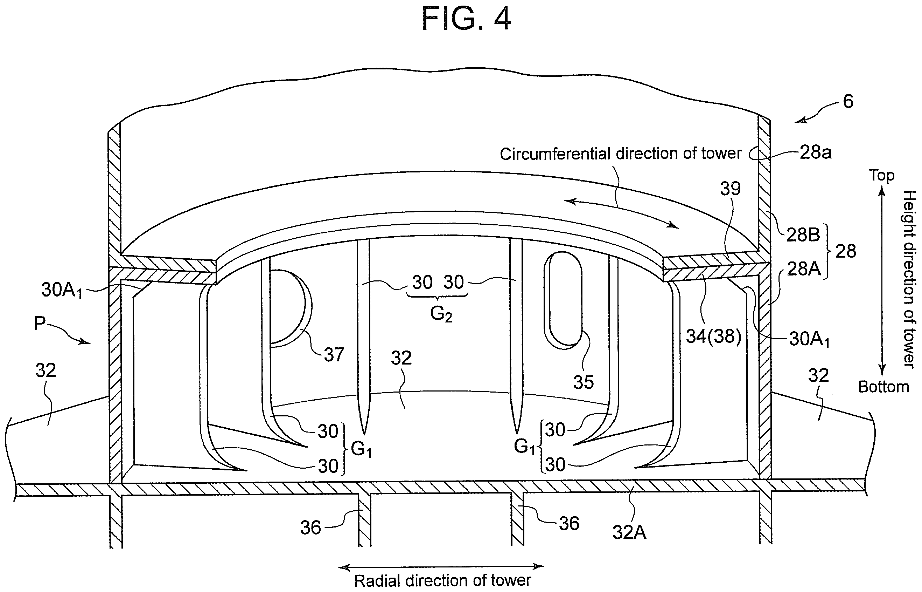

Fig. 4 is an oblique view of the vertical cross-section of the boundary part P between the tower 6 and the support part 32 (see Fig,. 1) according to some embodiments, particularly showing the cross-section parallel to the vertical plane that passes through the column 22B and the column 22C, among the cross-sections that pass through the axis of the tower 6.

For the configuration shown in Fig. 4, the same elements as the elements described using Figs. 1 to 3 are associated with the same reference signs to omit their description, while the different elements will be described below.

In some embodiments, as shown in Fig. 4, the tower body 28 is formed by connecting the ends of a plurality of cylindrical members 28A, 28B with one another, and the ring member 34 also serves as the lower flange 38 of the flanges 38, 39 for connecting the ends of the cylindrical members 28A, 28B with one another.

By using the flange 38 for connecting the ends of the cylindrical members with one another as the ring member 34, it is possible to effectively reduce the damage to the tower body 28 and the support part 32 with a simple configuration without additionally providing the ring member 34 separately from the flange 38. Herein, the internal configuration of the boundary part P between the tower 6 and the support part 32 shown in Fig. 4 is the same as the configuration shown in Figs. 2 and 3 except for the configuration of the above flanges 38, 39. Therefore, the description of the same configuration is omitted.

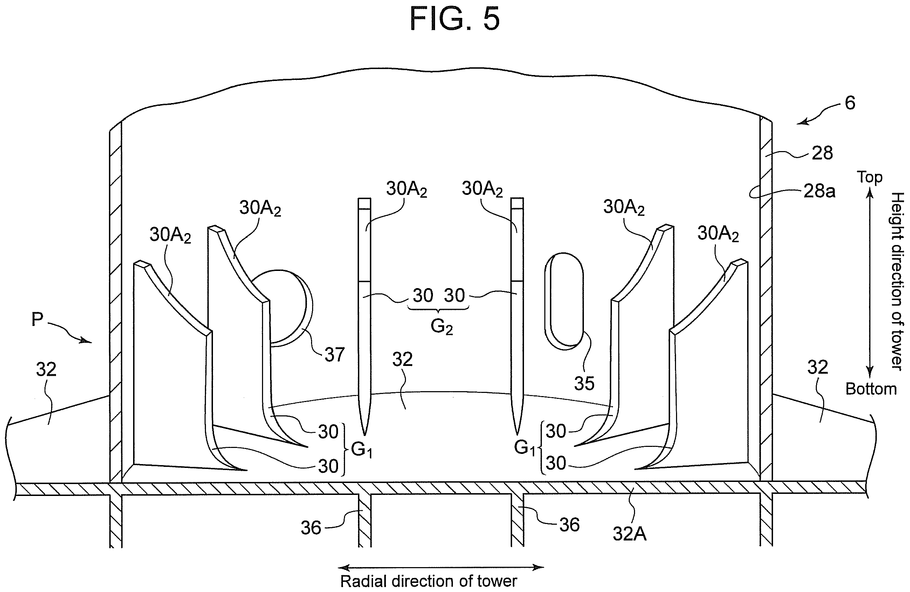

Fig. 5 is an oblique view of the vertical cross-section of the boundary part P between the tower 6 and the support part 32 (see Fig,. 1) according to some embodiments, particularly showing the cross-section parallel to the vertical plane that passes through the column 22B and the column 22C, among the cross-sections that pass through the axis of the tower 6.

For the configuration shown in Fig. 5, the same elements as the elements described using Figs. 1 to 4 are associated with the same reference signs to omit their description, while the different elements will be described below.

In some embodiments, as shown in Fig. 5, each of the upper end parts includes a cut-out 30A₂ at an inner end of said each of the upper end parts in a radial direction of the tower body 28 so that a width in the radial direction of the tower body 28 of each of the reinforcement member 30 increases from the upper end part toward a lower side.

The stress concentration particularly tends to occur on the boundary between the tower body 28 and the upper end part 30A of each of the reinforcement members 30 among the boundaries between the tower body 28 and each of the reinforcement members 30. Thus, by providing a cut-out 30A₂ at the inner end of said each of the reinforcement members 30, the stress concentration on the boundary between the tower body 28 and the upper end parts 30A of the reinforcement members 30 is decreased, and thus it is possible to effectively reduce the damage to the tower body28 and the reinforcement members 30.

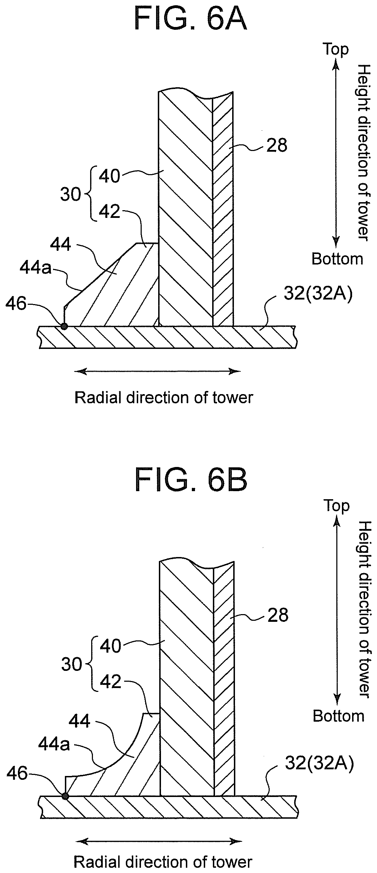

Fig. 6A is a cross-sectional view (cross-section in the radial direction of the tower body 28) of the lower end part of the reinforcement member 30 according to some embodiments. In some embodiments, as shown in Fig. 6A, each of the reinforcement members 30 shown in Figs. 1 to 5 may include a reinforcement member body 40 and a bracket 42 disposed on the lower end part of the reinforcement member body 40. The bracket 42 has a slanted part 44 that is slanted so that the width in the radial direction of the tower body 28 increases toward the lower side. By the reinforcement member 30 including the bracket 42, it is possible to decrease the stress concentration between the tower body 28 and the support part 32. Herein, as shown in Fig. 6B, the inner end 44a in the radial direction of the tower body 28 of the slanted part 44 of the bracket 42 may have a curvature such that the slanted part 44 has a downward concave. As a result, it is possible to decrease the stress concentration on the boundary 46 between the top-board 32A of the support part 32 and the inner end in the radial direction of the tower body 28 of the lower end part of the bracket 42.

Embodiments of the present invention were described in detail above, but the present invention is not limited thereto, and various amendments and modifications may be implemented within a scope of the present invention. For instance, some of the above embodiments may be combined arbitrarily.

For instance, although Fig. 1 illustrates a floating type as the wind turbine generating apparatus 1, the wind turbine generating apparatus 1 may be a seabed offshore wind turbine generating apparatus or an onshore wind turbine generating apparatus. That is, for any type of the wind turbine generating apparatuses, it is possible to employ the configuration for decreasing the stress concentration illustrated in Figs. 2 to 5 for the boundary part between the tower for the wind turbine generating apparatus and the support part (base) supporting the tower.

### Reference Signs List

- 1: Wind turbine generating apparatus
- 2: Blade
- 3: Rotor
- 4: Hub
- 5: Nacelle
- 6: Tower
- 9: Generator
- 10: Wind turbine generator
- 20: Float
- 22A: Center column
- 22B: Left column
- 22C: Right column
- 24A: First lower hull
- 24B: Second lower hull
- 26: Mooring cable
- 28: Tower body
- 28a: Internal circumferential face
- 28A,: 28B Cylindrical member
- 30: Reinforcement member
- 30A₁, 30A₂: Cut-out
- 30A: Upper end part
- 32: Support part
- 32A: Top-board
- 34: Ring member
- 35: Door opening
- 36: Rib
- 37: Duct opening
- 38: Flange
- 39: Flange
- G₁: First group of reinforcement member
- G₂: Second group of reinforcement member
- P: Boundary part

## Claims

1. A tower (6) for a wind turbine generating apparatus (1), comprising:
a tower body (28) of a cylindrical shape; and
a plurality of reinforcement members (30) disposed on an internal circumferential face (28a) of the tower body (28) so as to extend along a height direction of the tower body (28) from a support part (32) supporting the tower body (28),
wherein the reinforcement members (30) are arranged with an interval between one another in a circumferential direction of the tower body (28), and **characterized in that**
the tower (6) further comprises a ring member (34) disposed on the internal circumferential face (28a) of the tower body (28) so as to connect upper end parts (30A) of the reinforcement members (30), and
each of the upper end parts (30A) includes a cut-out (30A_{1;} 30A₂) at an outer end of said each of the upper end parts (30A) in a radial direction of the tower body (28) so that each of the reinforcement members (30) does not contact both of the ring member (34) and the tower body (28) at one point.

2. The tower (6) for a wind turbine generating apparatus (1) according to claim 1, wherein the tower body (28) is formed by connecting ends of a plurality of cylindrical members (28A; 28B) with one another, and
wherein the ring member (34) also serves as a flange (38;39) for connecting the ends of the cylindrical members (28A; 28B) with one another.

3. A tower (6) for a wind turbine generating apparatus (1), comprising:
a tower body (28) of a cylindrical shape; and
a plurality of reinforcement members (30) disposed on an internal circumferential face (28a) of the tower body (28) so as to extend along a height direction of the tower body (28) from a support part (32) supporting the tower body (28),
wherein the reinforcement members (30) are arranged with an interval between one another in a circumferential direction of the tower body (28), and **characterized in that** a cut-out (30A₁; 30A₂) is located at each of the upper end parts (30A) at an inner end of said each of the upper end parts (30A) in a radial direction of the tower body (28) so that a width in the radial direction of the tower body (28) of each of the reinforcement member (30) increases at the cut-out in the direction from the upper end part (30A) toward a lower side.

4. The tower (6) for a wind turbine generating apparatus (1) according to any of claims 1 to 3, wherein the reinforcement members (30) include a first group of reinforcement members (G₁) arranged radially to extend along the radial direction of the tower body (28); and a second group of reinforcement members (G₂) arranged along an extending direction of a plurality of ribs (36) provided standing upright in the support part (32), each of the second group of reinforcement members (G₂) being arranged over a respective one of the ribs (36).

5. A wind turbine generating apparatus (1) comprising:
a rotor (3) including at least one blade (2);
a generator (9) configured to be driven by rotation energy of the rotor (3) being transmitted; and
the tower (6) for the wind turbine generating apparatus (1) according to any one of claims 1 to 4.

## Patentansprüche

1. Mast (6) für eine Windturbinengeneratorvorrichtung (1), umfassend:
einen Mastkörper (28) von zylindrischer Form, und
mehrere Verstärkungselemente (30), die an einer Innenumfangsfläche (28a) des Mastkörpers (28) so angeordnet sind, dass sie sich entlang einer Höhenrichtung des Mastkörpers (28) von einem Stützteil (32), das den Mastkörper (28) stützt, erstrecken,
wobei die Verstärkungselemente (30) mit einem Intervall zwischen einander in einer Umfangsrichtung des Mastkörpers (28) angeordnet sind, und **dadurch gekennzeichnet, dass**
der Mast (6) ferner ein Ringelement (34) umfasst, das an der Innenumfangsfläche (28a) des Mastkörpers (28) so angeordnet ist, dass es obere Endteile (30A) der Verstärkungselemente (30) verbindet, und
jedes der oberen Endteile (30A) einen Ausschnitt (30A₁; 30A₂) an einem äußeren Ende eines jeden der oberen Endteile (30A) in einer radialen Richtung des Mastkörpers (28) enthält, dergestalt, dass keines der Verstärkungselemente (30) sowohl das Ringelement (34) als auch den Mastkörper (28) an einem einzelnen Punkt berührt.

2. Mast (6) für eine Windturbinengeneratorvorrichtung (1) nach Anspruch 1,
wobei der Mastkörper (28) gebildet wird, indem Enden von mehreren zylindrischen Elementen (28A; 28B) miteinander verbunden werden, und
wobei das Ringelement (34) auch als ein Flansch (38; 39) zum Verbinden der Enden der zylindrischen Elemente (28A; 28B) miteinander dient.

3. Mast (6) für eine Windturbinengeneratorvorrichtung (1), umfassend:
einen Mastkörper (28) von zylindrischer Form, und
mehrere Verstärkungselemente (30), die an einer Innenumfangsfläche (28a) des Mastkörpers (28) so angeordnet sind, dass sie sich entlang einer Höhenrichtung des Mastkörpers (28) von einem Stützteil (32), das den Mastkörper (28) stützt, erstrecken,
wobei die Verstärkungselemente (30) mit einem Intervall zwischen einander in einer Umfangsrichtung des Mastkörpers (28) angeordnet sind, und **dadurch gekennzeichnet, dass** sich ein Ausschnitt (30A₁; 30A₂) an jedem der oberen Endteile (30A) an einem inneren Ende eines jeden der Endteile (30A) in einer radialen Richtung des Mastkörpers (28) befindet, dergestalt, dass eine Breite in der radialen Richtung des Mastkörpers (28) eines jeden der Verstärkungselemente (30) an dem Ausschnitt in der Richtung von dem oberen Endteil (30A) in Richtung einer Unterseite zunimmt.

4. Mast (6) für eine Windturbinengeneratorvorrichtung (1) nach einem der Ansprüche 1 bis 3, wobei die Verstärkungselemente (30) eine erste Gruppe von Verstärkungselementen (G₁) enthalten, die radial so angeordnet sind, dass sie sich entlang der radialen Richtung des Mastkörpers (28) erstrecken, und eine zweite Gruppe von Verstärkungselementen (G₂) enthalten, die entlang einer Erstreckungsrichtung von mehreren Rippen (36) angeordnet sind, die aufrecht stehend in dem Stützteil (32) angeordnet sind, wobei jedes der zweiten Gruppe von Verstärkungselementen (G₂) über einer jeweiligen der Rippen (36) angeordnet ist.

5. Windturbinengeneratorvorrichtung (1), umfassend:
einen Rotor (3), der mindestens einen Flügel (2) enthält,
einen Generator (9), der dafür konfiguriert ist, durch eine übertragene Rotationsenergie des Rotors (3) angetrieben zu werden, und
den Mast (6) für die Windturbinengeneratorvorrichtung (1) nach einem der Ansprüche 1 bis 4.

## Revendications

1. Tour (6) pour une éolienne (1), comportant :
un corps de tour (28) d'une forme cylindrique ; et
une pluralité d'éléments de renfort (30) disposés sur une face circonférentielle interne (28a) du corps de tour (28) de façon à s'étendre le long d'une direction de hauteur du corps de tour (28) depuis une partie de support (32) supportant le corps de tour (28),
dans laquelle les éléments de renfort (30) sont prévus avec un intervalle entre chacun d'eux dans une direction circonférentielle du corps de tour (28), et **caractérisée en ce que**
la tour (6) comporte en outre un élément annulaire (34) disposé sur la face circonférentielle interne (28a) du corps de tour (28) de façon à relier des parties d'extrémité supérieure (30A) des éléments de renfort (30), et
chacune des parties d'extrémité supérieure (30A) comprend une découpe (30A1 ; 30A2) au niveau d'une extrémité extérieure de chacune desdites parties d'extrémité supérieure (30A) dans une direction radiale du corps de tour (28) de telle sorte que chacun des éléments de renfort (30) ne vient pas en contact à la fois avec l'élément annulaire (34) et le corps de tour (28) en un point.

2. Tour (6) pour une éolienne (1) selon la revendication 1, dans laquelle le corps de tour (28) est formé en reliant l'une à l'autre des extrémités d'une pluralité d'éléments cylindrique (28A ; 28B), et
dans laquelle l'élément annulaire (34) sert également de bride (38 ; 39) pour relier l'une à l'autre les extrémités des éléments cylindriques (28A ; 28B).

3. Tour (6) pour une éolienne (1), comportant :
un corps de tour (28) d'une forme cylindrique ; et
une pluralité d'éléments de renfort (30) disposés sur une face circonférentielle interne (28a) du corps de tour (28) de façon à s'étendre le long d'une direction de hauteur du corps de tour (28) depuis une partie de support (32) supportant le corps de tour (28),
dans laquelle les éléments de renfort (30) sont disposés avec un intervalle entre chacun d'eux dans une direction circonférentielle du corps de tour (28), et **caractérisée en ce que**
une découpe (30A ; 30A2) se trouve au niveau de chacune des parties d'extrémité supérieure (30A) à une extrémité interne de chacune desdites parties d'extrémité supérieure (30A) dans une direction radiale du corps de tour (28) de telle sorte qu'une largeur dans la direction radiale du corps de tour (28) de chacun des éléments de renfort (30) augmente au niveau de la découpe dans la direction depuis la partie d'extrémité supérieure (30A) vers un côté inférieur.

4. Tour (6) pour une éolienne (1) selon l'une quelconque des revendications 1 à 3, dans laquelle les éléments de renfort (30) comprennent un premier groupe d'éléments de renfort (G₁) disposés radialement pour s'étendre le long de la direction radiale du corps de tour (28) ; et un deuxième groupe d'éléments de renfort (G₂) disposés le long d'une direction d'extension d'une pluralité de nervures (36) prévues en se tenant debout dans la partie de support (32), chacun des éléments du deuxième groupe d'éléments de renfort (G2) étant disposé au-dessus d'une respective des nervures (36).

5. Eolienne (1) comportant :
un rotor (3) comprenant au moins une pale (2) ;
une génératrice (9) configurée pour être entraînée par l'énergie de rotation du rotor (3) qui est transmise ; et
la tour (6) pour l'éolienne (1) selon l'une quelconque des revendications 1 à 4.
